# EUROPÄISCHE PATENTSCHRIFT

(11) **EP 2 733 043 B1**
(45) Veröffentlichungstag und Bekanntmachung des Hinweises auf die Patenterteilung: **25.12.2019**
(21) Anmeldenummer: 13193221.2
(22) Anmeldetag: 15.11.2013
(51) Int. Cl.: B62B 3/02, B62B 3/10, B62B 5/00

(54) **Transporteinrichtung**
Transport device
Dispositif de transport

(30) Priorität: 16.11.2012 DE 202012104418 U
(43) Veröffentlichungstag der Anmeldung: 21.05.2014
(73) Patentinhaber: KMK Metallwerke GmbH, 88486 Kirchberg / Iller (DE)
(72) Erfinder: Miller, Karl-Martin, 88486 Kirchberg (DE)
(74) Vertreter: Hutzelmann, Gerhard

(56) Entgegenhaltungen:
- EP-A1- 1 437 283
- WO-A1-2011/076300
- DE-A1-102009 004 302
- DE-U1- 20 219 619

## Beschreibung

Die Erfindung bezieht sich auf eine Transporteinrichtung gemäß dem Oberbegriff des Hauptanspruches.

Aus der DE 10 2009 004 302 A1, der EP 1 437 283 A1, der DE 202 19 619 U1 und der WO 2011/076300A1 sind Transporteinrichtungen der genannten Art bekannt.

Hiervon ausgehend liegt der Erfindung die Aufgabe zugrunde, die Transporteinrichtung so auszurüsten, daß einerseits die Gegenstände einen sicheren Halt erfahren und andererseits die Gegenstände übersichtlich angeordnet und leicht und in der richtigen Reihenfolge entnommen werden können.

Diese Aufgabe wird gemäß der Erfindung durch die kennzeichnenden Merkmale des Hauptanspruches gelöst.

Durch die Anordnung der Halte- bzw. Sicherungsmittel in den Durchbrechungen und/oder Gewindebohrungen sind diese zum Einen leicht an der benötigten Stelle anzubringen aber auch jederzeit wieder zu verändern.

Den Gegenständen wird damit ein sehr guter Halt vermittelt. Darüber hinaus ist - da die Halte- bzw. Sicherungsmittel individuell einstellbar sind - eine optimale Platzierung der Gegenstände ermöglicht.

Als besonders günstig hat es sich erwiesen, wenn die Halte- bzw. Sicherungsmittel winkelförmig ausgebildet sind.

Damit lassen sich diese besonders einfach anbringen und geben trotzdem den Gegenständen einen ausreichenden Halt.

Ebenfalls sehr vorteilhaft ist es, wenn gemäß einer weiteren Ausgestaltung der Erfindung die Halte- bzw. Sicherungsmittel U- oder T-förmig ausgebildet sind.

Die Gegenstände können dabei zwischen die beiden Schenkel der U-förmigen Halte- bzw. Sicherungsmittel eingesetzt werden bzw. beide Schenkel können zum Abstützen jeweils eines Gegenstandes dienen. Bei einer T-förmigen Ausgestaltung können sich die Gegenstände beispielsweise zwischen zwei einander zugeordneten Halte- bzw. Sicherungsmitteln abstützen.

Erfindungsgemäß ist es darüber hinaus möglich, daß wenigstens ein Teilabschnitt des Halte- bzw. Sicherungsmittels C-förmig ausgebildet ist.

Zum Einen sind C-förmige Abschnitte besonders stabil und zum Anderen können diese Abschnitte gemäß einer weiteren Ausgestaltung der Erfindung mit als Berührungsflächen dienenden Auflagen versehen sein.

Erfindungsgemäß können als Auflagen Einzelpuffer, durchgehende Pufferplatten oder Flach- bzw. Rollenbürsten vorgesehen sein.

Eine weitere sehr vorteilhafte Ausgestaltung der Erfindung liegt vor, wenn Rohre mit rundem, ovalen oder eckigen Querschnitt in die Bohrungen eingesetzt sind und weitere Rohre über diese Rohre gesteckt sein können.

Hierdurch kann auf einfache Art und Weise ein Aufbau auf der Tragplatte hergestellt werden, der zur Aufnahme verschiedenster Gegenstände geeignet ist.

Dabei hat es sich als sehr vorteilhaft erwiesen, wenn die inneren und die äußeren Rohre unterschiedliche Längen aufweisen.

Hiermit kann sichergestellt werden, daß die verschiedenen Rohre ineinander greifen und einen stabilen Verbund ergeben.

Weiterhin ist es erfindungsgemäß sehr vorteilhaft, wenn Ansätze zur Begrenzung der Einstecklänge vorgesehen sind, wobei die Ansätze auch entfernbar ausgebildet sein können.

Auch damit wird ein zu tiefes Einstecken vermieden.

Gemäß einer weiteren vorteilhaften Ausgestaltung der Erfindung sind die Halte- bzw. Sicherungsmittel mit einem vorzugsweise plattenförmigen Etikettenträger ausgerüstet.

Damit ist eine einwandfreie Zuordnung der Gegenstände gewährleistet.

Ebenfalls sehr vorteilhaft ist es erfindungsgemäß, wenn ein Verbindungsteil vorgesehen ist, welches mehrere Halte- bzw. Sicherungsmittel miteinander zu verbinden vermag.

Hierdurch werden Konstruktionen aus Halte- bzw. Sicherungsmitteln stabilisiert und versteift. Das Verbindungsteil verbindet mehrere Halte- bzw. Sicherungsmittel, insbesondere Rohre miteinander und bildet so daraus einen Windverband, der eine sehr hohe Stabilität aufweist. Kipp- und Querkräfte können aufgenommen werden.

Dabei ist es äußerst vorteilhaft, wenn das Verbindungsteil als Aufnahme für Gegenstände ausgebildet ist oder eine Aufnahme für Gegenstände aufzunehmen vermag.

Dadurch kann das Verbindungsteil universell genutzt werden.

Ebenfalls sehr vorteilhaft ist es dabei, wenn das Verbindungsteil wannenförmig ausgebildet ist.

Hierin können Gegenstände einfach abgelegt werden. Zudem wird eine sehr hohe Stabilität erreicht.

Eine weitere sehr vorteilhafte Ausgestaltung der Erfindung liegt auch vor, wenn eine Halteschiene zum Einhängen von Gegenständen vorgesehen ist.

Damit können Gegenstände besonders leicht befestigt werden.

Sehr vorteilhaft ist es dabei, wenn die Halteschiene als Halter für Schalen, Becher, Lagerboxen und/oder insbesondere Sichtlagerboxen ausgebildet ist. Die Halteschienen können hierfür unterschiedliche Höhen und Teilungen aufweisen.

Hiermit kann Material übersichtlich und platzsparend angeordnet werden.

Eine weitere sehr vorteilhafte Ausgestaltung liegt vor, wenn ein oder mehrere Kragarme vorgesehen sind, die an wenigstens einem Halte- bzw. Sicherungsmittel angreifen.

Auf diese Kragarme kann längeres Material aufgelegt werden.

Eine weitere vorteilhafte Ausgestaltung der Erfindung liegt darin, daß an der Tragplatte vertikal verlaufende Streben angeordnet sind, die ihrerseits eine sogenannte Reling, Querstreben oder andere horizontale Elemente tragen und daß an den Streben und/oder der Reling und/oder den Querstreben Zwischenplatten angeordnet sein können, die Halte- bzw. Sicherungsmittel aufzunehmen vermögen.

Damit ist es möglich, die Gegenstände auch in ihrem oberen Bereich ausreichend zu halten und zu sichern und vor allem auch kann eine horizontale Ebene geschaffen werden, die vielfältig genutzt werden kann.

Eine weitere sehr vorteilhafte Ausgestaltung liegt vor, wenn Palettenecken oder andere Sicherungs- und Befestigungsmittel vorgesehen sind, die in die Durchbrechungen einsetzbar ausgebildet sind.

Hiermit wird das unerwünschte Herunterrutschen von Gegenständen von der Tragplatte verhindert.

Ebenfalls sehr vorteilhaft ist es erfindungsgemäß, wenn Halteeinrichtungen vorgesehen sind, die in entsprechende Öffnungen der zu transportierenden Werkstücke einzugreifen vermögen.

Durch solche Halteeinrichtungen können beispielsweise Türen an den vorgesehenen Scharnieren gehalten werden.

Äußerst vorteilhaft ist es erfindungsgemäß auch, wenn Rasteinrichtungen, Schnapper, Gelenkeinrichtungen vorgesehen sind, welche in Werkstücke einzugreifen bzw. diese zu sichern vermögen.

Dadurch können zu transportierende Gegenstände sehr einfach fixiert und befestigt werden.

Ebenfalls sehr vorteilhaft ist es gemäß einer weiteren Ausgestaltung der Erfindung auch, wenn die Rollen, Füße, Stapleraufnahmen modular in Durchbrechung der Tragplatte einsetzbar ausgebildet sind.

Hiermit kann die Transporteinrichtung sehr flexibel auf unterschiedlichste Einsatzbedingungen angepasst werden.

Dabei hat es gemäß einer weiteren Ausgestaltung der Erfindung auch als sehr vorteilhaft erwiesen, wenn Zugeinrichtungen, Zugeinrichtungsadapter, Kupplungen, Kupplungsadapter, Handdeichseln in entsprechende Öffnungen der Tragplatte einsetzbar sind.

Damit kann ebenfalls eine Anpassung an unterschiedlichste Umgebungsbedingungen vorgenommen werden.

In der Zeichnung ist die Erfindung anhand mehrerer Ausführungsbeispiele dargestellt. Dabei zeigen:
- Fig.1: eine Tragplatte mit seitlichen Streben sowie einer Reling, wobei verschiedene Halte- bzw. Sicherungsmittel zum Befestigen verschiedener Gegenstände vorgesehen sind,
- Fig.2: ein winkelförmig ausgebildetes Halte- bzw. Sicherungsmittel, wobei am einen Schenkel zusätzlich seitliche Lappen zu einer U-Form abgewinkelt sind,
- Fig.3: ein U-förmig ausgebildetes Haltemittel
- Fig.4: einen U-förmigen Haltebügel der beispielsweise eine Bürste zu tragen vermag,
- Fig.5: ein U-förmig ausgebildetes Halte- bzw. Sicherungsmittel ähnlich Fig.3, bei dem zusätzlich ein C-förmig ausgebildeter Abschnitt vorgesehen ist,
- Fig.6: ein kastenförmig aus einem doppel-T-förmigen Blechzuschnitt gefaltetes Halte- bzw. Sicherungsmittel,
- Fig.7: eine Zwischenplatte die seitlich an der Tragplatte an Seitenstreben bzw. einer Reling angeordnet werden kann und ebenfalls Halte- bzw. Sicherungsmittel aufzunehmen vermag,
- Fig.8: einen Winkel dessen beide Schenkel mit einem Boden verbunden sind,
- Fig.9: ein Halte- bzw. Sicherungsmittel zum Auflegen auf die Tragplatten mit einem mittleren U-förmig nach oben gerichteten Abschnitt,
- Fig.10: ein T-förmiges Halte- bzw. Sicherungsmittel, an dem sich Gegenstände abzustützen vermögen,

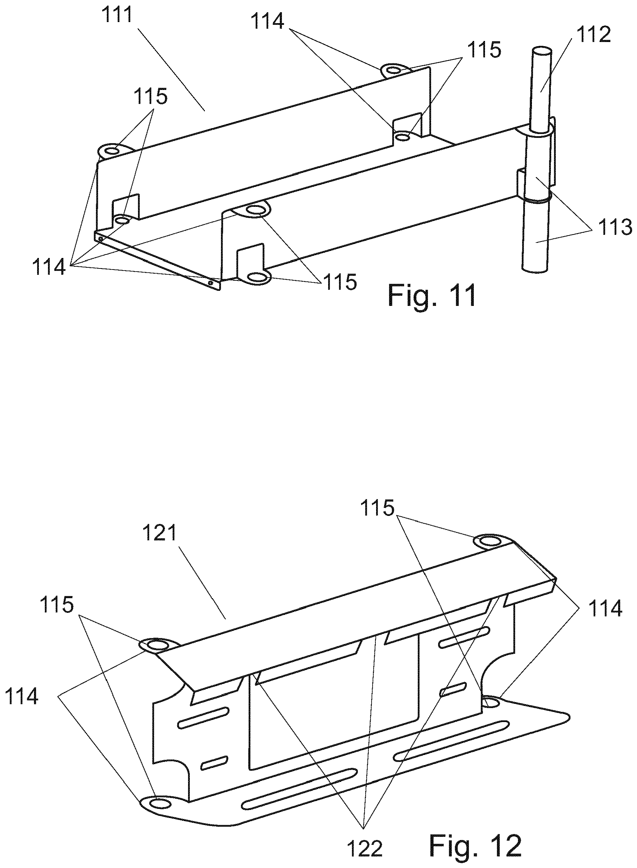

- Fig.11: ein wannenförmig ausgebildetes Verbindungsteil, welches einen Windverband zwischen vier senkrechten Streben herstellt,
- Fig.12: eine Einhängehalterung,
- Fig.13: eine auf einem Gestell angeordnete Einhängehalterung,
- Fig.14: ein Einsatzteil als Aufnahme für Kleinteileboxen oder dergleichen,

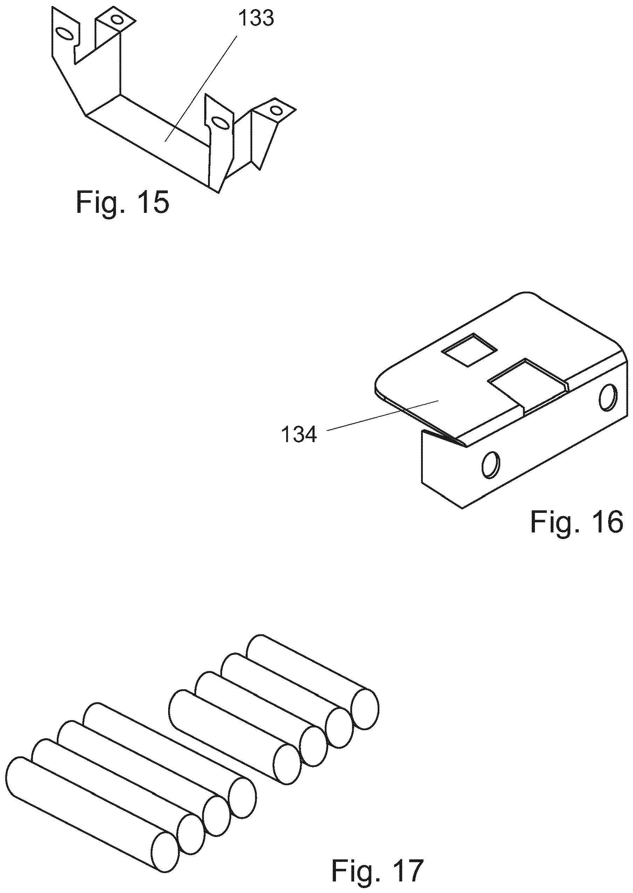

- Fig.15: eine anbringbare Stapleraufnahme,
- Fig.16: einen Adapter für eine Zugdeichsel,
- Fig.17: mehrere Standstreben in unterschiedlichen Längen

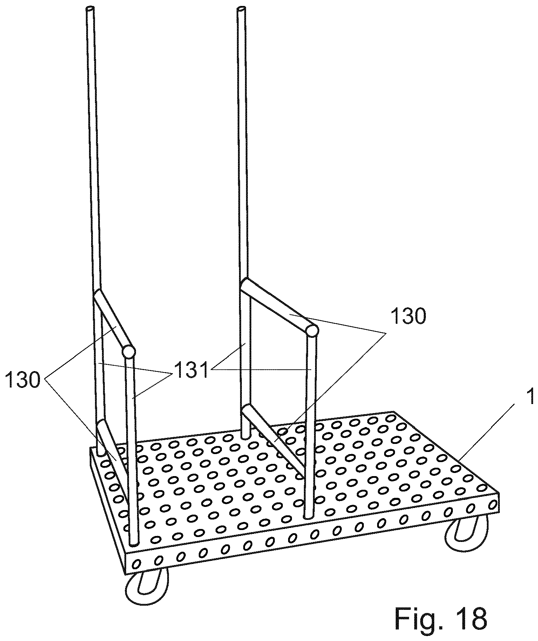

- Fig.18: eine Tragplatte mit mehreren darauf aufgebauten Strebenverbänden,
- Fig.19: einen Aufbau mit mehreren Verbindungsteilen, Streben und Aufnahmewannen,
- Fig.20: eine Rastvorrichtung zur Befestigung von Türen,
- Fig.21: eine Aufnahmevorrichtung für Türscharniere,
- Fig.22: einen Aufbau zum Transport von Türen mit abklappbaren Streben,
- Fig.23: ein Paletteneck zur Sicherung von Gegenständen und Paletten,
- Fig.24: eine weitere Variante einer Aufnahmewanne mit seitlichen Anschlägen,
- Fig.25: ein Grundaufbau einer Tragplatte mit Lagerelementen, und
- Fig.26: eine Kennzeichnungstafel.

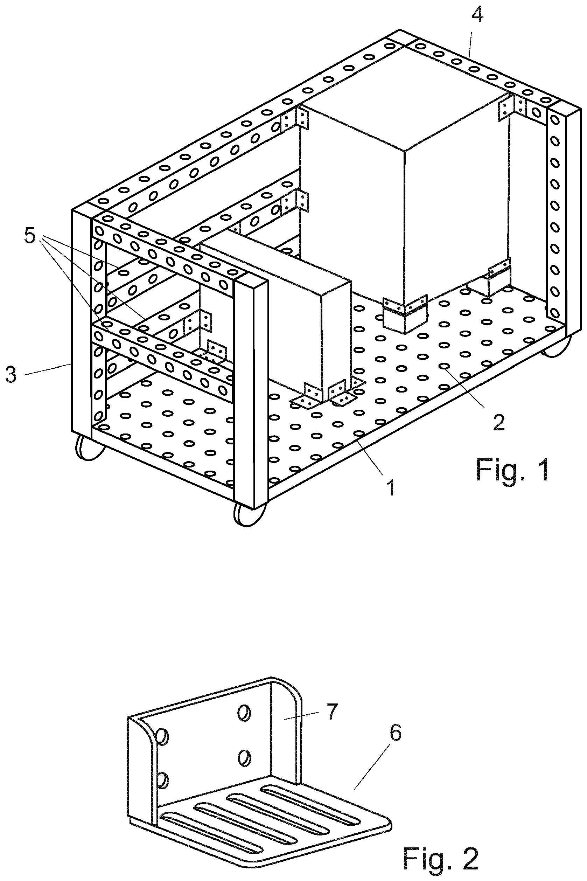

Mit 1 ist in Fig.1 eine Tragplatte bezeichnet, die in einem gleichmäßigen Rastermaß mit Durchbrechungen (Bohrungen) bzw. Gewindebohrungen 2 versehen ist. Seitlich an der Tragplatte 1 sind vertikal verlaufende Streben 3 befestigt, die eine Reling 4 am oberen Ende tragen. Zwischen der Tragplatte 1 und der oberen Reling 4 kann noch eine Zwischen-Reling 5 vorgesehen sein. Diese Zwischen-Reling 5 kann im Bedarfsfall auch mehrfach vorgesehen werden. An der Tragplatte 1 und eventuell der Reling 4 sowie der Zwischen-Reling 5 sind mehrere Halte- bzw. Sicherungsmittel lösbar befestigt.

In der einfachsten Form ist das Halte- bzw. Sicherungsmittel 6 winkelförmig ausgebildet, wie dies in Fig. 2 dargestellt ist. Zusätzlich sind hier zur Verbesserung der Steifigkeit am oberen Schenkel seitliche Lappen 7 abgewinkelt, so daß der obere dem jeweiligen Gegenstand zugeordnete Schenkel U-förmig ausgebildet ist.

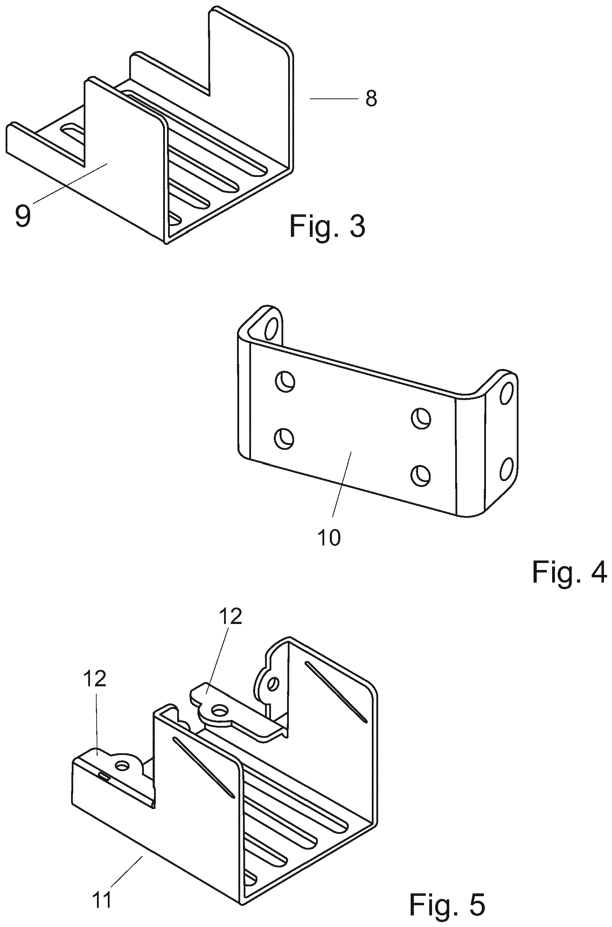

Wie in Fig. 3 dargestellt, kann das Halte- bzw. Sicherungsmittel 8 jedoch auch U-förmig ausgebildet sein. Die Seitenschenkel 9 sind dabei stufenförmig ausgebildet und dienen in ihrem niedrigeren Abschnitt beispielsweise der Aufnahme eines in Fig 4 gezeigten U-förmigen Bügels 10. Dieser Bügel 10 kann seinerseits weitere Mittel wie z.B. Puffer, Leisten oder Bürsten aufnehmen.

Ein weiteres U-förmig ausgebildetes Halte- bzw. Sicherungsmittel 11 ist in Fig.5 dargestellt. Hierbei ist der niedrigere Abschnitt der beiden seitlichen Schenkel C-förmig ausgebildet und hat damit eine Auflage 12 für weitere Halte- bzw. Sicherungsmittel wie Puffer oder Bürsten.

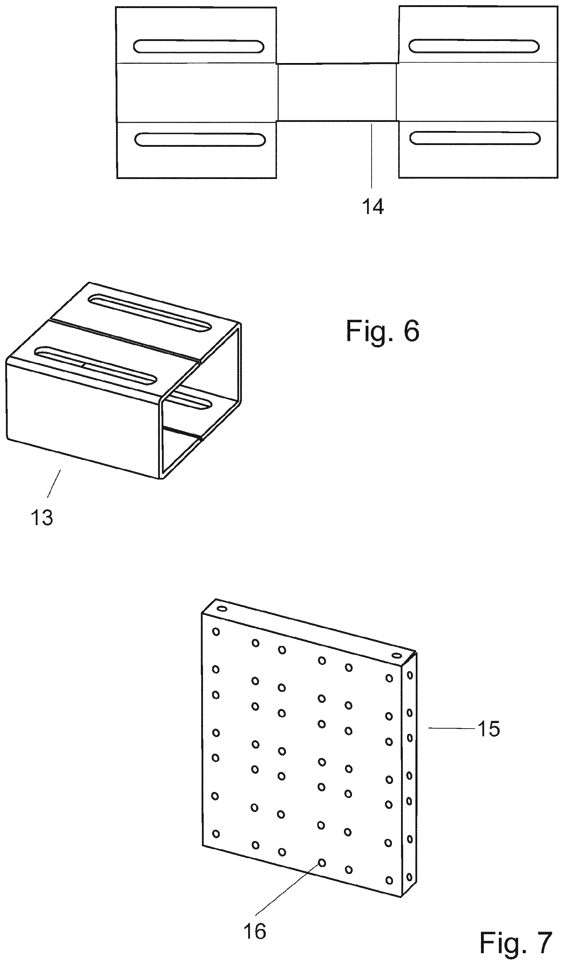

Fig.6 zeigt ein kastenförmig ausgebildetes Halte- bzw. Sicherungsmittel 13, das aus einem ebenfalls dargestellten doppel-T-förmigen Blechzuschnitt 14 aufgefaltet ist.

Schließlich zeigt die Fig.7 eine Zwischenplatte 15, die mit einer Vielzahl von Durchbrechungen 16 versehen ist, in denen weitere Halte- bzw. Sicherungsmittel befestigbar sind. Diese Zwischenplatte wird bevorzugt an der Reling 4 bzw. 5 angeordnet und gibt den dort eingelagerten Gegenständen auch in ihrem oberen Bereich einen guten Halt. Die Durchbrechungen weisen bevorzugt das Rastermaß der Durchbrechungen der Tragplatte auf.

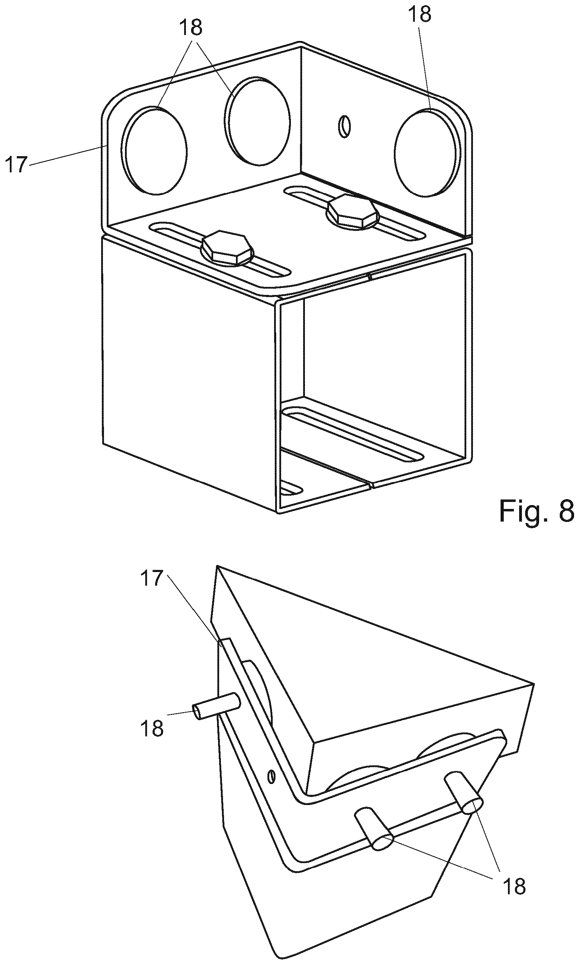

In Fig.8 ist ein Winkel 17 dargestellt, der zum Abstützen der Ecken eines Gegenstandes dient. Dieser Winkel weist einen Boden auf, welcher beide Schenkel mit einander verbindet. Mit diesem Boden kann der Winkel 17 direkt auf der Tragplatte 1 oder wie dargestellt auf einem weiteren Halte- bzw. Sicherungsmittel befestigt werden. An den beiden Schenkeln sind Puffer 18 zur Anlage an den Gegenständen gelagert. Diese Puffer sind vorzugsweise über Gewindespindeln einstellbar.

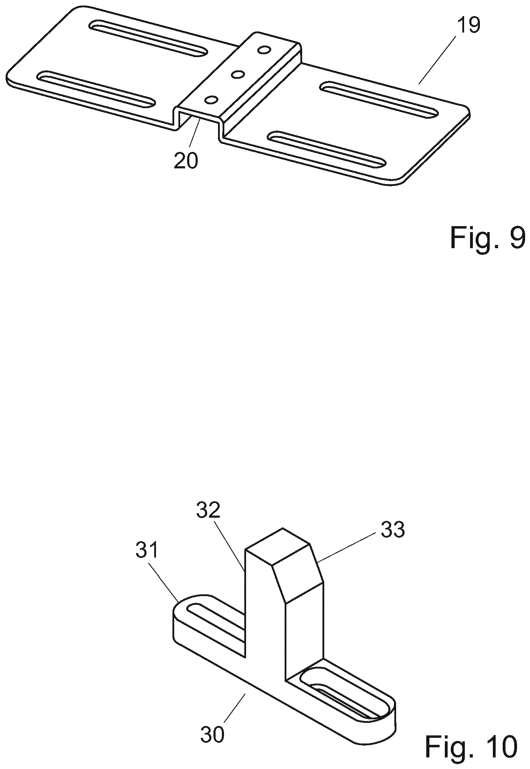

Um die Gegenstände unabhängig vom Rastermaß der Tragplatte 1 an dieser befestigen zu können ist in Fig.9 ein Halte- bzw. Sicherungsmittel 19 dargestellt, das einen mittleren, nach oben gerichteten U-förmigen Abschnitt 20 aufweist, auf welchen der jeweilige Gegenstand aufgesetzt werden kann. Die Befestigung erfolgt dann an diesem U-förmigen Abschnitt und damit unabhängig von der Lochung der Tragplatte 1.

In Fig. 10 ist ein weiteres Halte- bzw. Sicherungsmittel 30 dargestellt, welches einen unteren Schenkel 31 aufweist, von dem ein Schenkel 32 aufragt. Der untere Schenkel 31 wird an der Tragplatte oder an der Reling befestigt. Der aufragende Schenkel dient zur Abstützung von Gegenständen. Gegenstände können sich dabei auf den unteren Schenkel 31 auflegen und gegen den aufragenden Schenkel 32 drücken. Es ist dabei denkbar, daß mehrere dieser Sicherungsmittel 30 zusammenwirken und so einen Gegenstand fixieren.

Zur besseren Einsetzbarkeit von Gegenständen kann das vom unteren Schenkel 31 wegweisende Ende des aufragenden Schenkels 32 mit einer Abschrägung 33 ausgerüstet sein.

Die gezeigten Halte- bzw. Sicherungsmittel sind in jeder Zusammensetzung kombinierbar, so daß allen Anforderungen an eine sichere Halterung der Gegenstände gerecht werden kann.

Die Halte- bzw. Sicherungsmittel sind auch in abgewandelter Form einsetzbar und werden entsprechend den jeweiligen Erfordernissen platziert. Die Gegenstände können damit sicher verwahrt werden, wobei die Übersichtlichkeit und damit ein gezieltes Einsortieren und Entnehmen gewährleistet ist.

Die Halte- bzw. Sicherungsmittel können winkelförmig ausgebildet sein, wobei beide Schenkel über einen Boden mit einander verbunden sind, und wobei der Boden unmittelbar auf der Tragplatte oder auf einem weiteren Halte- bzw. Sicherungsmittel befestigt sein kann.

Diese winkelförmigen Halte- bzw. Sicherungsmittel können den Gegenständen einen sehr guten Halt gewährleisten und sind auch dazu geeignet Höhenunterschiede auszugleichen bzw. die Gegenstände mit Abstand von der Tragplatte anzuordnen.

Die winkelförmigen Halte- bzw. Sicherungsmittel können an ihren beiden Schenkeln mit Puffern od.dgl. versehen sein.

U-förmig ausgebildete Halte- bzw. Sicherungsmittel können vorgesehen sein, die auf die Tragplatte aufgelegt werden können und ihrerseits den jeweiligen Gegenstand abzustützen vermögen.

Je nach Höhe des U-förmigen Abschnittes kann hiermit der Abstand des Gegenstandes von der Tragplatte eingestellt werden. Die Befestigung des Gegenstandes erfolgt dabei am U-förmigen Halte- bzw. Sicherungsmittel und ist damit unabhängig vom Befestigungs-Raster der Tragplatte.

Auch kastenförmig ausgebildete Halte- bzw. Sicherungsmittel können vorgesehen sein, die vorzugsweise aus einem doppel-T-förmigen Blechzuschnitt auffaltbar sind.

Auch mit diesen kann der Abstand der Gegenstände von der Tragplatte fixiert werden.

Zusätzlich ist es denkbar, daß ein Verbindungsteil 111 vorgesehen ist, welches mehrere Halte- bzw. Sicherungsmittel 3, 4, 5 aber auch Streben miteinander zu verbinden vermag und diese so stabilisiert und versteift. Es ergibt sich ein Windverband, so daß die Halte- bzw. Sicherungsmittel auch Querbelastungen durch beispielsweise Kipp- und Biegekräfte in alle Richtungen aufzunehmen vermögen.

Mehrere solche Verbindungsteile können über- und nebeneinander angeordnet sein. Die senkrechten Streben, die bei der in diesem Ausführungsbeispiel dargestellten Rohrausführung sind aus inneren Rohren 112 und äußeren Rohren 113 aufgebaut. Die inneren Rohre 112 ragen durch das Verbindungsteil hindurch, wobei dazu in nach außen ragenden Laschen 114 dem Außendurchmesser der inneren Rohre 112 entsprechende Ausnehmungen 115 vorgesehen sind. Die äußeren Rohre dagegen stützen sich an den Laschen 114 ab.

Der Außendurchmesser der inneren Rohre 112 beträgt in diesem Ausführungsbeispiel achtundzwanzig Millimeter, wohingegen der Außendurchmesser der äußeren Rohre 113 zweiunddreißig Millimeter beträgt. Der Innendurchmesser der äußeren Rohre 113 entspricht dem Außendurchmesser der inneren Rohre 112. Andere Durchmesserpaarungen sind denkbar.

Damit ergibt sich ein sehr stabiler Verband, der aber durch den Einsatz unterschiedlicher Rohrlängen in unterschiedlichsten Höhen angeordnet werden kann.

Durch das Verbindungsteil 111 wird der gesamte Aufbau sehr stabil und belastbar.

Dieses Verbindungsteil 111 kann dabei auch als Ablage ausgebildet werden, wobei sich eine wannenförmige Ausbildung als besonders vorteilhaft erwiesen hat, da dann Gegenstände einfach hineingelegt werden können.

Es ist aber auch denkbar, daß spezielle Aufnahmewannen 116 auf die Verbindungsteile 111 aufgesetzt werden, die dann ihrerseits, in diesem Ausführungsbeispiel quer zur Ausrichtung der Verbindungsteile 111 die Aufstapelung von Sortier- und Kleinteileboxen ermöglichen.

Es können auch Halteschienen 121 vorgesehen werden, in die Gegenstände eingehängt werden können.

Besonders können Behälter, Lagerboxen, insbesondere Sichtlagerboxen 122 oder dergleichen in solche Halteschienen 121 eingehängt werden, wodurch sich eine sichere, platzsparende aber dennoch leicht zugängliche Aufbewahrungsmöglichkeit für Material ergibt.

Diese Halteschienen sind bezüglich ihrer Höhe variabel. Besonders vorteilhaft ist es jedoch, wenn diese auf die Höhe der Verbindungsteile 111 abgestimmt sind, da diese dann miteinander kombiniert werden können.

Hinsichtlich der Längserstreckung der Halteschienen 121 ist eine variable Teilung erwünscht, wie sie durch Unterbrechungen 122 in den Figuren ausgebildet ist.

Die Halteschienen 121 bilden ebenfalls einen Windverband.

Eine besonders gute Stabilität ergibt sich, wenn im unteren Bereich, jedoch mit Abstand zur Tragplatte 1 Querstreben 130 vorgesehen sind, die zwei senkrechte Streben 131 miteinander verbinden, wodurch die senkrechten Streben 131 eine erhöhte Stabilität erhalten, da Kipp und Biegekräfte nicht nur über die kurze Einstecklänge der senkrechten Streben 131 in die Tragplatte 1 eingeleitet werden müssen.

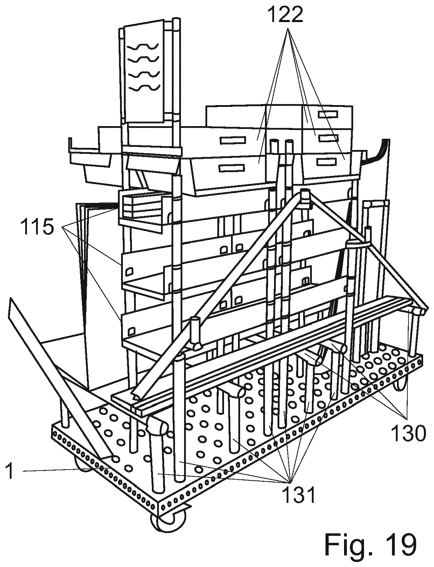

Wie in Fig. 19 dargestellt können auf diese Art und Weise sehr komplexe Strukturen aufgebaut werden, die in ergonomischer Höhe den Transport und die Zur-Verfügung-Stellung von Werkstoffen in der Fertigung, Werkzeug usw., ermöglichen.

Stapleraufnahmen 133 und auch Deichseladapter 134 können bei Bedarf ebenfalls in die Tragplatte 1 eingehängt und an der benötigten Stelle befestigt werden.

Zusätzlich können Palettenecken 135 eingesetzt werden, die auf der Tragplatte 1 angeordnete Gegenstände am Herunterrutschen hindern. Ist die Tragplatte auf Standard-Palettenmaß ausgerichtet, können die Ecken 135 auch in den Ecken der Tragplatte 1 angeordnet werden um eine darauf abgestellte Palette zu sichern.

Die an der Unterseite der Tragplatte 1 angeordneten Fahrrollen können ebenfalls modular und auswechselbar ausgebildet sein. Je nach Einsatzzweck können unterschiedliche Rollen angebracht werden. So sind normale Kunststoffrollen, Stahlrollen, gummiummantelte Rollen aber auch Spezialanfertigungen denkbar, die als Bockrollen, aber auch als Lenkrollen ausgebildet sein können.

Weitere Befestigungsmittel auch für spezielle Anwendungen sind denkbar, die Rastelemente, Klinken, Anschläge, Nasen oder dergleichen aufweisen können.

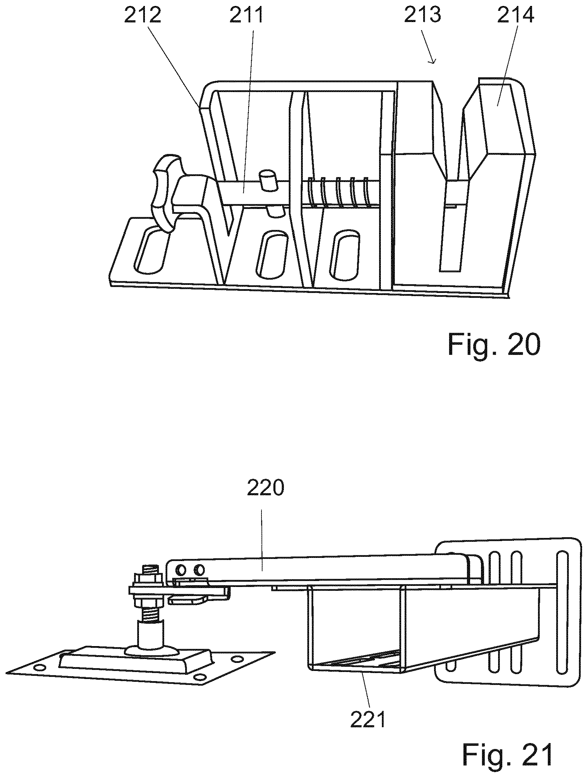

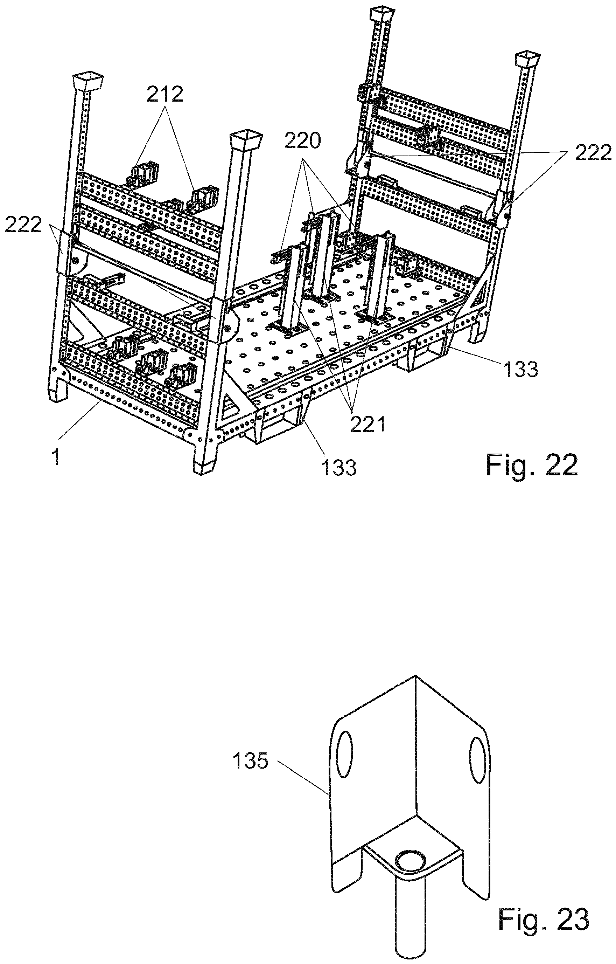

Ein Beispiel ist in den Fig. 20, 21 und 22 dargestellt.

Dabei zeigt Fig. 20 eine Rasteinrichtung mit einem Rastbolzen 211, der in einer Führung 212 gelagert ist. Der Rastbolzen 211 greift durch eine Aufnahme 213 hindurch, in die ein Scharnierloch oder eine andere Einrichtung einer Türe einzugreifen vermag. Das Scharnier wird durch den Rastbolzen 211 festgelegt. Der Rastbolzen 211 kann dabei konisch ausgebildet sein, so daß sich dieser im Scharnierloch zu verspannen vermag und so Bewegungen, insbesondere Vibrationen oder dergleichen verhindert.

Um Beschädigungen, aber auch Klappern oder dergleichen zu vermeiden, können Kunststoff oder Gummi Dämpfungsauflagen 214 in der Aufnahme 213 angeordnet sein.

Um die Türen nun auch an der abgewandten Seite festzulegen sind dort Aufnahmen 220 für die Schlossriegel vorgesehen. Bei einfachen Schlössern kann diese Aufnahme 220 einfach als Ausnehmung ausgebildet sein, oder aber, wie in den Zeichnungen dargestellt auch als anschraubbare Schloßriegelgegenstück ausgebildet sein können und so das Einsetzen und auch das Herausnehmen der Türen erleichtern.

Die Aufnahmen 220 sind dabei an senkrechten Halteelementen 221 angebracht. Diese Halteelemente 221 können einen Klappmechanismus 222 aufweisen, der eine Höhenverringerung des leeren Aufbaus zum Rücktransport ermöglicht. Der Klappmechanismus 222 ist dabei als Gelenk mit einer Rastung oder anderweitigen Sicherung ausgebildet.

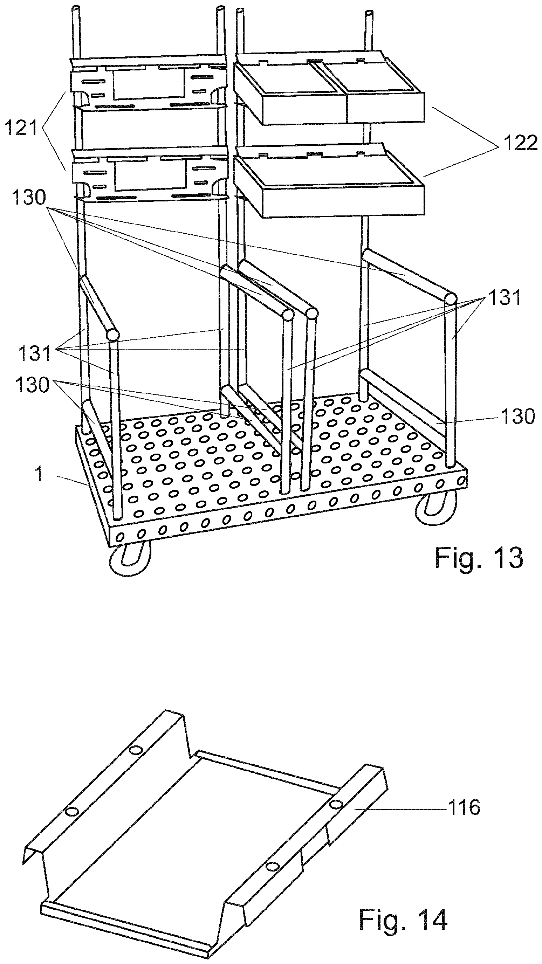

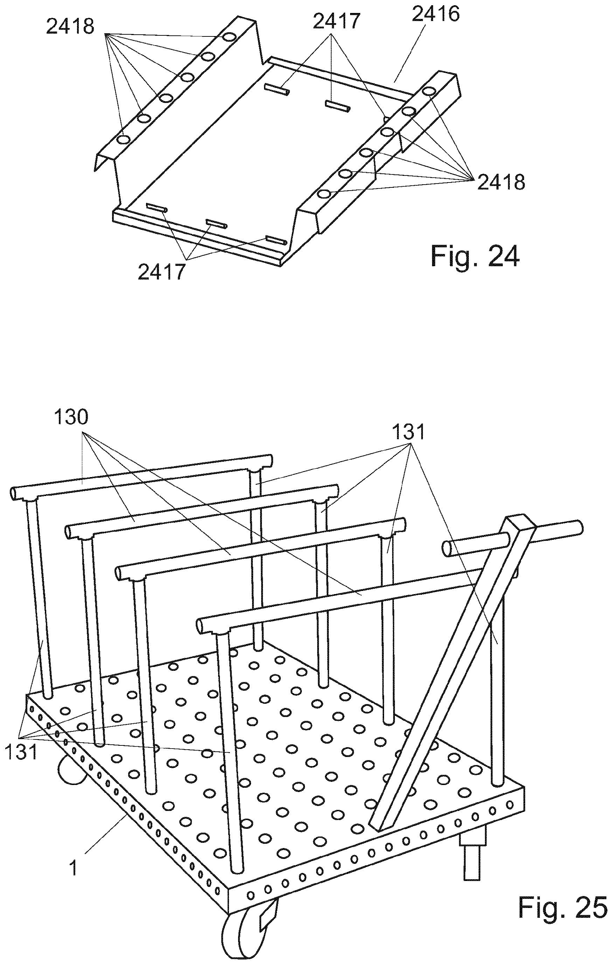

In Fig. 24 ist eine weitere Variante der Aufnahmewanne 116 aus Fig. 14 dargestellt. Diese Aufnahmewanne 2416 ist an den seitlichen Enden mit einer Überhöhung 2417 versehen, die ein versehentliches Herabrutschen der aufgestapelten Sortier- und Kleinteileboxen verhindert. Zusätzlich sind Durchbrechungen 2418 vorgesehen, durch die Rohre 112/113 hindurchgreifen können, oder aber Befestigungselemente für die Sortier- und Kleinteileboxen oder dergleichen einzugreifen vermögen. In diesem Ausführungsbeispiel sind diese Durchbrechungen 2418 als kreisförmige Durchbrechungen ausgeführt, die in einem der Tragplatte 1 entsprechenden Rastermaß angeordnet sind.

In Fig. 25 ist eine weitere Variante eines Standardaufbaus dargestellt. Hierbei sind jeweils zwei senkrechte Streben 131 mit einer Querstrebe 130 miteinander verbunden. Mehrere solcher Kombinationen sind auf der Tragplatte 1 vorgesehen, so daß sich eine Lagerebene ergibt.

Die Querstreben 130 können dabei mit einem rutschhemmenden Belag versehen sein.

Unterschiedliche Höhen sind je nach Einsatzzweck ebenso denkbar, wie auch die Kombination unterschiedlicher Höhen auf einer einzigen Tragplatte 1.

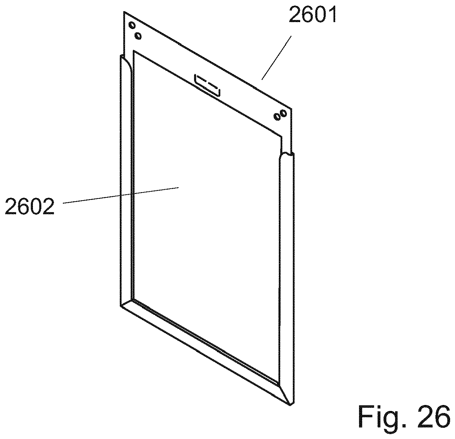

Eine Kennzeichnungstafel 2601, wie sie in Fig. 26 dargestellt ist, kann auch auf der Tragplatte 1 bzw. dem darauf errichteten Aufbau angebracht sein. Dabei kann die Kennzeichnungstafel 2601 eine Durchbrechung 2602 aufweisen, die es ermöglicht, ein in die Kennzeichnungstafel 2601 eingestecktes, nicht dargestelltes Kennzeichnungsschild von beiden Seiten sehen zu können. Die Kennzeichnungstafel 2601 kann Befestigungselemente aufweisen, die ein leichtes Befestigen im Rastersystem der Tragplatte 1 bzw. des Aufbaus ermöglichen.

Durch eine verschiedene Farbausgestaltung kann beispielsweise ein "Ampelsystem" zum Beispiel mit den Statusmerkmalen "Fertig", "in Arbeit" oder "gesperrt" realisiert werden. Andere Varianten sind denkbar.

Das hier beschriebene System ist auch in Zügen einsetzbar. Durch einfach einhängbare Deichseln, die beispielsweise an ihrem einen Ende drehbar und an ihrem anderen Ende fest stehend eingehängt werden können kann sehr leicht ein solcher Zug zusammengestellt werden. Die Länge der Deichseln ist dabei auf die Länge und Breite der Tragplatten 1 abzustimmen, damit diese spurtreu laufen und sich nicht berühren. Die Deichseln können dabei nicht nur direkt in die Tragplatten 1 eingehängt werden, sondern auch in anbaubare oder fest angeordnete Verbindungselemente eingehängt werden.

## Patentansprüche

1. Transporteinrichtung zum Transportieren und Lagern von Gegenständen und Gruppen von Gegenständen mit einer Tragplatte (1), wobei auf der Unterseite der Tragplatte (1) Rollen oder Stapleraufnahmen angeordnet sind, und wobei über die Tragplatte (1) eine Vielzahl von Durchbrechungen (2) und/oder Gewindebohrungen verteilt angeordnet sind, wobei im Bereich der Seitenkanten der Tragplatte (1) Wangen vorgesehen sein können, die nach unten ragen und die wiederum ebenfalls mit Durchbrechungen (2) und/oder Gewindebohrungen ausgerüstet sein können, die ebenfalls in einem vorgegebenen Raster angeordnet sein können, wobei in den Durchbrechungen (2) und/oder Gewindebohrungen Halte- bzw. Sicherungsmittel für die Gegenstände lösbar befestigt sind, wobei die Halte- bzw. Sicherungsmittel (6) winkelförmig ausgebildet sind, **dadurch gekennzeichnet, daß** die Stapleraufnahmen vorhanden sind und modular in Durchbrechung der Tragplatte einsetzbar ausgebildet sind und daß an den beiden Schenkel des winkelförmigen Halte- bzw. Sicherungsmittels Puffer (18) zur Anlage an den Gegenständen gelagert sind.

2. Transporteinrichtung nach einem der vorangehenden Ansprüche, **dadurch gekennzeichnet, daß** Rohre mit rundem, ovalen oder eckigen Querschnitt in die Bohrungen eingesetzt sind und daß weitere Rohre über diese Rohre gesteckt sein können und/oder daß die inneren und die äußeren Rohre unterschiedliche Längen aufweisen können und/oder daß Ansätze zur Begrenzung der Einstecklänge vorgesehen sind, wobei die Ansätze auch entfernbar ausgebildet sein können.

3. Transporteinrichtung nach einem der vorhergehenden Ansprüche, **dadurch gekennzeichnet, daß** die Halte- bzw. Sicherungsmittel mit einem vorzugsweise plattenförmigen Etikettenträger ausgerüstet sind.

4. Transporteinrichtung nach einem der vorangehenden Ansprüchen, **dadurch gekennzeichnet, daß** ein Verbindungsteil vorgesehen ist, welches mehrere Halte- bzw. Sicherungsmittel miteinander zu verbinden und zu stabilisieren vermag, wobei das Verbindungsteil als Aufnahme für Gegenstände ausgebildet sein kann oder eine Aufnahme für Gegenstände aufzunehmen vermag, und/oder daß das Verbindungsteil wannenförmig ausgebildet sein kann.

5. Transporteinrichtung nach einem der vorangehenden Ansprüche, **dadurch gekennzeichnet, daß** eine Halteschiene zum Einhängen von Gegenständen vorgesehen ist.

6. Transporteinrichtung nach Anspruch 5, **dadurch gekennzeichnet, daß** die Halteschiene als Halter für Schalen, Becher, Lagerboxen und/oder insbesondere Sichtlagerboxen ausgebildet ist.

7. Transporteinrichtung nach einem der vorangehenden Ansprüche, **dadurch gekennzeichnet, daß** ein oder mehrere Kragarme vorgesehen sind, die an wenigstens einem Halte- bzw. Sicherungsmittel angreifen.

8. Transporteinrichtung nach einem der vorhergehenden Ansprüche, **dadurch gekennzeichnet, daß** an der Tragplatte vertikal verlaufende Streben (3) angeordnet sind, die ihrerseits eine sogenannte Reling (4,5), Querstreben oder andere horizontale Elemente tragen und daß an den Streben (3) und/oder der Reling (4,5) und/oder den Querstreben Zwischenplatten (15) angeordnet sein können, die Halte- bzw. Sicherungsmittel aufzunehmen vermögen.

9. Transporteinrichtung nach einem der vorangehenden Ansprüche, **dadurch gekennzeichnet, daß** Palettenecken oder andere Sicherungs- und Befestigungsmittel vorgesehen sind, die in die Durchbrechungen einsetzbar ausgebildet sind.

10. Transporteinrichtung nach einem der vorhergehenden Ansprüche, **dadurch gekennzeichnet, daß** Halteeinrichtungen vorgesehen sind, die in entsprechende Öffnungen der zu transportierenden Werkstücke einzugreifen vermögen.

11. Transporteinrichtung nach einem der vorangehenden Ansprüche, **dadurch gekennzeichnet, daß** Rasteinrichtungen, Schnapper oder Gelenkeinrichtungen vorgesehen sind, welche in Werkstücke einzugreifen bzw. diese zu sichern vermögen.

12. Transporteinrichtung nach einem der vorhergehenden Ansprüche, **dadurch gekennzeichnet, daß** Zugeinrichtungen, Zugeinrichtungsadapter, Kupplungen, Kupplungsadapter oder Handdeichseln in entsprechende Öffnungen der Tragplatte einsetzbar sind.

## Claims

1. Transport device for transporting and storage of articles and groups of articles with a support plate (1), wherein rollers or stacker receptacles are arranged on the underside of the support plate (1) and wherein passages (2) and/or threaded bores in a plurality are arranged in distribution over the support plate (1), wherein cheeks, which project downwardly and which in turn can similarly be furnished with passages (2) and/or threaded bores able to be similarly arranged in a predetermined grid, can be provided in the region of the side edges of the support plate (1), wherein holding or securing means for the articles are detachably secured in the passages (2) and/or threaded bores, wherein the holding or securing means (6) are of angular construction, **characterised in that** the stacker receptacles are present and are formed to be insertable in the passage of the support plate in modular manner and that buffers (18) for contact with the articles are mounted on the two limbs of the angular retaining or securing means.

2. Transport device according to the preceding claim, **characterised in that** tubes with round, oval or polygonal cross-section are inserted into the bores and that further tubes can be plugged over these tubes and/or that the inner and outer tubes can have different lengths and/or that abutments for limitation of the insertion length are provided, wherein the abutments are also be constructed to be removable.

3. Transport device according to one of the preceding claims, **characterised in that** the holding or securing means are equipped with a preferably plate-shaped label carrier.

4. Transport device according to any one of the preceding claims, **characterised in that** a connecting part is provided, which is capable of connecting several holding and securing means together and of stabilising them, wherein the connecting part can be constructed as a receptacle for articles or is capable of receiving a receptacle for articles and/or that the connecting part can be of trough-shaped construction.

5. Transport device according to any one of the preceding claims, **characterised in that** a retaining rail for suspension of articles is provided.

6. Transport device according to claim 5, **characterised in that** the retaining rail is constructed as a holder for dishes, cups, storage boxes and/or, in particular, open-end storage boxes.

7. Transport device according to any one of the preceding claims, **characterised in that** one or more cantilever arms engaging at at least one holding or securing means is or are provided.

8. Transport device according to any one of the preceding claims, **characterised in that** vertically extending struts (3) which in turn carry a so-called railing (4, 5), cross struts or other horizontal elements are arranged at the support plate and that intermediate plates (15) capable of receiving the retaining or securing means are arranged at the struts (3) and/or the railing (4, 5) and/or the cross struts.

9. Transport device according to any one of the preceding claims, **characterised in that** pallet corners or other securing and fastening means, which are constructed to be insertable into the passages, are provided.

10. Transport device according to any one of the preceding claims, **characterised in that** retaining devices capable of engaging in corresponding openings of the workpieces to be transported are provided.

11. Transport device according to any one of the preceding claims, **characterised in that** detent devices, snap devices or joint devices capable of engaging in the workpieces or of securing these are provided.

12. Transport device according to any one of the preceding claims, **characterised in that** draw devices, draw device adapters, couplings, coupling adapters or manual drawbars are insertable into corresponding openings of the support plate.

## Revendications

1. Dispositif de transport pourvu d'un panneau de support (1), conçu ou réalisé pour transporter et stocker des objets et des groupes d'objets, des roulettes ou des logements de chariots gerbeurs étant implanté(e)s à la face inférieure dudit panneau de support (1), et de multiples perforations (2) et/ou perçages taraudés étant agencé(e)s avec répartition en partie haute dudit panneau de support (1), sachant que des joues, pouvant être prévues dans la région des arêtes latérales dudit panneau de support (1), font saillie vers le bas et peuvent être pareillement munies, à leur tour, de perforations (2) et/ou de perçages taraudés pouvant être semblablement agencé(e)s en un réseau quadrillé préétabli, des moyens respectifs de retenue ou d'arrêt, dédiés aux objets, étant fixés de manière libérable dans lesdites perforations (2) et/ou dans lesdits perçages taraudés, lesquels moyens respectifs (6) de retenue ou d'arrêt sont réalisés en forme de cornières, **caractérisé par le fait que** les logements de chariots gerbeurs sont présents et sont réalisés avec faculté d'insertion modulaire dans les perforations du panneau de support ; et **par le fait que** des patins amortisseurs (18), affectés à la venue en applique contre les objets, sont placés sur les deux ailes du moyen respectif de retenue ou d'arrêt, configuré en cornière.

2. Dispositif de transport selon l'une des revendications précédentes, **caractérisé par le fait que** des tubes de section transversale ronde, ovale ou polygonale sont insérés dans les perçages ; et **par le fait que** des tubes additionnels peuvent être emboîtés sur ces tubes ; et/ou **par le fait que** les tubes intérieurs et extérieurs peuvent présenter des longueurs différentes ; et/ou **par le fait que** des appendices sont prévus pour limiter la longueur d'emboîtement, lesdits appendices pouvant également être réalisés avec faculté de dépose.

3. Dispositif de transport selon la revendication 1, **caractérisé par le fait que** les moyens respectifs de retenue ou d'arrêt sont équipés d'un porte-étiquettes, préférentiellement en forme de platine.

4. Dispositif de transport selon l'une des revendications précédentes, **caractérisé par** la présence d'une partie de liaison apte à relier mutuellement, et à stabiliser plusieurs moyens respectifs de retenue ou d'arrêt, laquelle partie de liaison peut être réalisée en tant que logement dédié à des objets, ou est en capacité de recevoir un logement dédié à des objets ; et/ou par le fait que ladite partie de liaison peut être réalisée en forme d'auge.

5. Dispositif de transport selon l'une des revendications précédentes, **caractérisé par le fait qu'**un rail de retenue est prévu pour l'accrochage d'objets.

6. Dispositif de transport selon la revendication 5, **caractérisé par le fait que** le rail de retenue est réalisé en tant que support pour des écuelles, des gobelets, des boîtes de stockage, et/ou des boîtes de stockage transparentes en particulier.

7. Dispositif de transport selon l'une des revendications précédentes, **caractérisé par** la présence d'un ou plusieurs bras en porte-à-faux, venant en prise avec au moins un moyen respectif de retenue ou d'arrêt.

8. Dispositif de transport selon l'une des revendications précédentes, **caractérisé par le fait que** des entretoises (3) s'étendant verticalement sur le panneau de support portent, à leur tour, une « rambarde » (4, 5), des entretoises transversales ou d'autres éléments horizontaux ; et **par le fait que** des panneaux intermédiaires (15), aptes à recevoir des moyens respectifs de retenue ou d'arrêt, peuvent être implantés sur lesdites entretoises (3) et/ou sur ladite rambarde (4, 5) et/ou sur lesdites entretoises transversales.

9. Dispositif de transport selon l'une des revendications précédentes, **caractérisé par** la présence de coins de palettes, ou de moyens d'arrêt et de fixation autres, réalisés avec faculté d'insertion dans les perforations.

10. Dispositif de transport selon l'une des revendications précédentes, **caractérisé par** la présence de dispositifs de retenue, aptes à pénétrer dans des ouvertures correspondantes des pièces à transporter.

11. Dispositif de transport selon l'une des revendications précédentes, **caractérisé par** la présence de dispositifs de crantage, de systèmes à déclic ou de dispositifs articulés aptes, respectivement, à pénétrer dans des pièces ou à arrêter ces dernières.

12. Dispositif de transport selon l'une des revendications précédentes, **caractérisé par le fait que** des dispositifs de traction, des adaptateurs de dispositifs de traction, des accouplements, des adaptateurs d'accouplements, ou des barres de couplage manuel, peuvent être inséré(e)s dans des ouvertures correspondantes du panneau de support.
